(19) Europäisches Patentamt / European Patent Office / Office européen des brevets

(11) EP 2 539 034 B1

(12) EUROPÄISCHE PATENTSCHRIFT

(45) Veröffentlichungstag und Bekanntmachung des Hinweises auf die Patenterteilung:
30.04.2014  Patentblatt 2014/18

(21) Anmeldenummer: 11705515.2

(22) Anmeldetag: 21.02.2011

(51) Int Cl.:
B01D 19/04 (2006.01)     D21C 3/28 (2006.01)

(86) Internationale Anmeldenummer:
PCT/EP2011/052493

(87) Internationale Veröffentlichungsnummer:
WO 2011/104196 (01.09.2011 Gazette 2011/35)

(54) **VERFAHREN ZUM ENTLÜFTEN VON FLÜSSIGKEITEN**

METHOD FOR DEAERATING LIQUIDS

PROCÉDÉ POUR LA DÉSAÉRATION DE LIQUIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2010  DE 102010002234**

(43) Veröffentlichungstag der Anmeldung:
**02.01.2013  Patentblatt 2013/01**

(73) Patentinhaber: **Wacker Chemie AG
81737 München (DE)**

(72) Erfinder:
• **BURGER, Willibald
84489 Burghausen (DE)**
• **ESTERBAUER, Ludwig
84539 Ampfing (DE)**
• **RAUTSCHEK, Holger
01612 Nünchritz (DE)**

(74) Vertreter: **Deffner-Lehner, Maria et al
Wacker Chemie AG
Zentralbereich Patente, Marken und Lizenzen
Hanns-Seidel-Platz 4
81737 München (DE)**

(56) Entgegenhaltungen:
EP-A1- 2 060 674     WO-A1-2010/108858
WO-A1-2010/108859   DE-A1- 1 444 442
DE-A1- 10 233 701    DE-A1- 19 918 361
US-A- 5 700 351      US-A- 6 162 330

EP 2 539 034 B1

**Beschreibung**

Die Erfindung betrifft ein Verfahren zur Entlüftung von Flüssigkeiten, insbesondere zur Entlüftung wässriger Suspensionen, wie sie bei der Zellstoffherstellung anfallen.

In vielen flüssigen, insbesondere wässrigen Systemen, die als erwünschte oder auch unerwünschte Bestandteile oberflächenaktive Verbindungen enthalten, können Probleme mit eingeschlossenen Luftblasen auftreten, wenn diese Systeme in mehr oder weniger intensivem Kontakt mit gasförmigen Stoffen gebracht werden, beispielsweise beim Begasen von Abwässern, beim intensiven Rühren von Flüssigkeiten, bei Destillations-, Wasch- oder Färbeprozessen. Insbesondere Flüssigkeiten, die fein verteilte Partikel wie z. B. Fasern enthalten, an denen sich Luftblasen anlagern können, neigen dazu Luft einzuschließen.

Bei der Zellstoffherstellung verhindert die eingeschlossene Luft z. B. eine schnelle Drainage des Wassers und senkt somit Qualität und Produktivität,

Die Bekämpfung von Oberflächenachaum kann mit bekannten Entschäumen erfolgen. Diese bestehen z. B, aus Polyorganosiloxanen, wie in US 3,235,509 A beschrieben, aus Polyorganosiloxanen in Kombination mit Polyoxyalkylenen, wie in US 3,984,347 A beschrieben, oder aber auch aus Polyoxyalkylenen allein, wie in "Antifoaming action of polyoxyethylenepolyoxypropylene-polyoxyethylene-type triblock copolymers on BSA foams", Nemeth, Zs.; Racz, Gy. ; Koczo, K. Colloids Surf., A, 127(1-3), 151-162, 1997 beschrieben.

Aus DE 1444442 A1 ist bekannt, dass der Schaumzerfall in Hydraulikflüssigkeiten, die ca, 50% Glycole und Polyglycole enthalten, durch das chemisch verwandte Polypropylenglycol verbessert werden kann.

Herkömmliche Entschäumer sind bekanntermaßen für die Bekämpfung von "trockenem" Oberflächenschaum geeignet, bei dem große Gasblasen durch dünne Flüssigkeitsfilme getrennt sind (wie in Langmuir 2004, 20, 9463-9505 beschrieben). Ihre Wirksamkeit zur Entlüftung von Flüssigkeit-Gas-Mischungen, die zum größten Teil aus Flüssigkeit gegebenenfalls mit suspendierten Feststoffen bestehen, ist jedoch nicht gegeben.

Das liegt daran, dass die Oberflächeneigenschaften und die Löslichkeit von Entschäumern, die den Oberflächenschaum, der auch als Makroschaum bezeichnet wird, zerstören, sich notwendigerweise von den Eigenschaften von Entlüftern unterscheiden (siehe Adams, J. W. et al. Verfkroniek, 68 (10) 1996 S. 43-45). Entschäumer müssen unverträglich sein und schnell an die Oberfläche wandern. Entlüfter, die dagegen den Mikroschaum bekämpfen sollen, müssen besser verträglich sein, da sie nicht an der Oberfläche sondern in der flüssigen Phase wirken sollen. Deshalb ist es nicht möglich von einer guten Entschäumerwirkung auf eine Entlüfterwirkung zu schließen (vgl. EP 257 356 B1, Seite 2, Zeilen 28-31).

Deshalb werden spezielle Formulierungen für diese Anwendungen vorgeschlagen. GB 2 350 117 A schlägt zur besseren Entlüftung vor lineare oder cyclische Siloxane zu verwenden, die Si-C oder Si-O-C gebundene Polyethergruppen tragen. EP 257 356 B1 beansprucht Siloxane mit (Isobutyryloxy)isopropyldimethyl-propoxygruppen die eine bessere Entlüftung von Plastisolen ermöglichen sollen als Polyethersiloxane.

Es besteht weiterhin der Bedarf nach besseren und ökonomischeren Entlüftungsmitteln für verschiedene Anwendungen, insbesondere für die Herstellung von Zellstoff.

Überraschenderweise wurde gefunden, dass spezielle Polyoxyalkylene eine überlegene Entlüftungswirkung aufweisen.

Gegenstand der Erfindung ist ein Verfahren zum Entlüften von bei der Zellstoffherstellung anfallenden Flüssigkeiten, die wässrige faserhaltige Suspensionen sind und mindestens 70 Gew.-% Wasser enthalten,
durch Zugabe von 0,0001 bis 1,0 Gew.-%, vorzugsweise 0,0005 bis 0,1 Gew.-%, einer Mischung aus
100 Gewichtsteilen Polypropylenglycolen mit einer mittleren molaren Masse (Zahlenmittel $M_n$) von 1000 bis 8000 g/mol und 1 bis 200 Gewichtsteilen, vorzugsweise 2 bis 100 Gewichtsteilen, verzweigten Polyether-Polysiloxan-Copolymeren, bei denen die Polyetherreste seitenständig an lineare Siloxanketten über Kohlenwasserstoffreste SiC-gebunden sind und wobei diese linearen Siloxanketten über seitenständige organische Brücken miteinander verbunden sind,
zu diesen Flüssigkeiten.

Es kann eine Art von Polypropylenglycolen oder mehrere Arten von Polypropylenglycolen eingesetzt werden.

Entlüftung im Sinne dieser Erfindung ist ein Prozess bei dem der Gasgehalt einer Flüssigkeit, die Gas in dispergierter Form enthält, also einen Mikroschaum enthält, bei dem der Volumenanteil der Flüssigkeit in dem Mikroschaum höher ist als der Volumenanteil an Gas, reduziert wird.

Unter einem Verfahren zum Entlüften von Flüssigkeiten ist im Sinne dieser Erfindung insbesondere ein Verfahren zu verstehen, bei dem der Gasgehalt einer flüssigen Phase, die vorzugsweise höchstens 50 Volumen %, besonders bevorzugt höchstens 20 Volumen %, insbesondere höchstens 10 Volumen %, Gas in dispergierter Form enthält, signifikant reduziert wird, so dass vorzugsweise ein Gasgehalt kleiner 5 Volumen %, insbesondere kleiner 2 Volumen % erreicht wird.

Die zu entlüftenden Flüssigkeiten enthalten neben dem erfindungsgemäßen Zusatz von Polypropylenglycolen vorzugsweise weniger als 1 Gew.-%, bevorzugt weniger als 0,1 Gew.-%, weitere Glycole oder Polyglycole, besonders bevorzugt keine weiteren Glycole oder Polyglycole.

Bei der Gewinnung von Zellstoff, welcher eine mehr oder weniger stark verunreinigte Zellulose darstellt, aus zellulosehaltigen Materialien, wie Holz, werden unterschiedliche Aufschlusslösungen eingesetzt, um die übrigen Bestandteile, wie Lignin, zu lösen. In einem anschließenden Wasch- und Siebprozess wird der anfallende Zellstoff von der Aufschlusslösung abgetrennt und gereinigt.

Das wohl wichtigste Aufschlussverfahren ist der alkalische Sulfat- oder Kraftprozess, bei dem mit einer NaOH/NaS enthaltenden Aufschlusslösung der sogenannte Sulfat- oder Kraftzellstoff gewonnen wird. Als weiteres Produkt fällt Schwarzablauge an, welche neben der Aufschlusslösung die übrigen Bestandteile des zellulosehaltigen Materials, wie Holz, enthält.

Die Anwendung der erfindungsgemäßen Polypropylenglycole kann direkt oder wegen der besseren Verteilung und Handhabung als Lösung in geeigneten organischen Stoffen erfolgen oder als Emulsion erfolgen.

Geeignete organische Zusatzstoffe zu den erfindungsgemäßen Polypropylenglycolen sind, Mineralöle, native öle, Isoparaffine, Polyisobutylene, Rückstände aus der Oxoalkoholsynthese, Ester niedermolekularer synthetischer Carbonsäuren, wie z. B. 2,2,4-Trimethyl-1,3-pentandiol-diisobutyrat, Fettsäureester, wie z.B. Dodecylpalmitat oder Isopropylmyristat, Fettalkohole, Ether von Alkoholen, Phthalate und Ester der Phosphorsäure.

Es kann dabei eine Art von erfindungsgemäßen Polyether-Polysiloxan-Copolymeren oder mehrere Arten von erfindungsgemäßen Polyether-Polysiloxan-Copolymeren eingesetzt werden.

Erfindungsgemäße Polyether-Polysiloxan-Copolymere sind Stand der Technik und dem Fachmann bekannt.

Erfindungsgemäß werden verzweigte Polyether-Polysiloxan-Copolymere eingesetzt, bei denen die Polyetherreste seitenständig an lineare Siloxanketten über Kohlenwasserstoffreste, vorzugsweise zweiwertige Kohlenwasserstoffreste, SiC-gebunden sind und wobei diese linearen Siloxanketten über seitenständige organische Brücken miteinander verbunden.

Beispiele für diese organischen Brücken sind SiC-gebundene lineare oder verzweigte organische Reste, vorzugsweise zweiwertige Kdhlenwasserstoffreste, die ein oder mehrere Heteroatome ausgewählt aus der Gruppe der Sauerstoff- und Stickstoffatome enthalten können, wie Alkylenreste, SiC-gebundene Polyetherreste, die über Alkylenreste, an die Siloxanketten gebunden sind, und SiC-gebundene zweiwertige Kohlenwasserstoffreste, wie Alkylenreste, die Polyether- und Urethangruppen enthalten.

Besonders gut geeignet sind verzweigte Polyether-Polysiloxan-Copolymere, wie sie z. B. in EP 1 076 073 A1, EP 1 424 117 A2 oder WO 2006/128624 A1 als Komponente von Entschäumern beschrieben sind.

Bevorzugt werden als verzweigte Polyether-Polysiloxan-Copolymere solche eingesetzt, bei denen die Siloxanketten über seitenständige zweiwertige SiC-gebundene Kohlenwasserstoffreste, die Polyetherreste und Urethangruppen enthalten, miteinander verbunden sind.

Diese Polyether=Polysiloxan-Copolymere und deren Herstellung sind in WO 2006/128624 A1, insbesondere auf Seite 3, Zeile 8 bis Seite 13, Zeile 38, beschrieben (incorporated by reference).

Die erfindungsgemäßen Polyether-Polysiloxan-Copolymere besitzen eine Viskosität von vorzugsweise 50 bis 100 000 000 mPa·s bei 25°C, bevorzugt 100 bis 1 000 000 mPa·s bei 25°C und besonders bevorzugt 1 000 bis 100 000 mPa·s bei 25°C.

Beschreibung der Entlüftungsversuche:

350 ml Schwarzablauge aus dem Zellstoffprozess (Hart- und Weichholz von der Fa. UPM Kymmene Oy Kuusankoski, Finnland, mit einem Wassergehalt von größer 80 Gew.-%) werden unter Rühren in einem Becherglas für 15 Minuten unter konstanten Bedingungen auf 80°C aufgeheizt, danach werden 220 ml davon in einen ebenfalls auf 80°C thermostatisierten Glas-Rührautoklaven überführt.

Bestimmung von $D_0$:

Der Autoklav wird ohne eine Zugabe von Entlüfter verschlossen und nach einer Wartezeit von 3 Sekunden wird das Auslassventil am Boden des Autoklaven für 5 Sekunden geöffnet.
Die Schwarzablauge wird nun unter 3 bar Druck in einen Messzylinder abgelassen und danach werden sofort die Masse und das Volumen für die Dichteberechnung bestimmt.

Bestimmung von $D_2$:

Der Autoklav wird ohne Zugabe eines Entlüfters verschlossen und
die enthaltene Schwarzablauge wird unter einem Pressluft-Druck von 3 bar für 10 Minuten bei 800 UpM gerührt.
Nach einer Wartezeit von 3 Sekunden wird das Auslassventil am Boden des Autoklaven für 5 Sekunden geöffnet.
Die Schwarzablauge wird nun unter 3 bar Druck in einen Messzylinder abgelassen und danach werden sofort die Masse und das Volumen für die Dichteberechnung bestimmt.

Bestimmung von $D_1$:

Der Autoklav wird nach Zugabe der in der Tabelle unten angegebenen Menge eines Entlüfters verschlossen und die enthaltene Schwarzablauge wird unter einem Pressluft-Druck von 3 bar für 10 Minuten bei 800 UpM gerührt. Nach einer Wartezeit von 3 Sekunden wird das Auslassventil am Boden des Autoklaven für 5 Sekunden geöffnet.

Die Schwarzablauge wird nun unter 3 bar Druck in einen Messzylinder abgelassen und danach werden sofort die Masse und das Volumen für die Dichteberechnung bestimmt.

$D_0$ = Dichte der Schwarzablauge bei 80°C ohne Entlüfter; ohne Rühren
$D_2$ = Dichte der Schwarzablauge bei 80°C ohne Entlüfter; nach Rühren
$D_1$ = Dichte der Schwarzablauge bei 80°C mit Entlüfter; nach Rühren

$$\texttt{Entlüftung in \% = 100 x } (D_1 - D_2) \texttt{ / } (D_0 - D_2)$$

$D_0$ (Hartholz): 1, 01g/cm$^3$ und $D_2$ (Hartholz): 0,83g/cm$^3$.
$D_0$ (Weichholz): 1,03g/cm$^3$ und $D_2$ (Weichholz): 0,77g/cm$^3$.

Beispiele 1 und 2 (mit den Polymeren 1 und 2),
Beispiel 3 (Mischung aus 70% Polymer 1 und 30% Polymer V1),
Beispiel 4 (Mischung aus 70% Polymer 1 und 30% Polymer V3), Vergleichsversuche 1 und 2 (mit den Polymeren V1 und V2) Vergleichsversuch 3 (Mischung aus 70% Polymer 1 und 30% Polymer V4),

Für den Einsatz als Entlüfter werden die Polymere 1 und 2 in den Beispiele 1 und 2 und die Polymere V1 und V2 in den Vergleichsversuchen 1 und 2 direkt, ohne einen weiteren Zusatzstoff, in die Schwarzablauge zudosiert.

Polymer 1:

Polymer 1 ist ein Polypropylenglykol mit mittlerer molarer Masse (Zahlenmittel $M_n$) von 2000.

Polymer 2:

Polymer 2 ist ein Copolymerisat von Ethylenoxid und Propylenoxid,bei dem Polyethylenoxid den zentralen Molekülteil bildet mit der allg. Konstitutionsformel

$$\text{H- [O-CH (CH}_3\text{) -CH}_2]_m\text{- (U-CH}_2\text{-CH}_2]_n\text{- [O-CH(CH}_3\text{) -CH}_2)]_o\text{-OH}$$

Die mittlere molare Masse (Zahlenmittel $M_n$) beträgt' 3500g/mol, wobei der molare Massenanteil von Polypropylenoxid ca. 3100g/mol beträgt.

Polymere V1:

Beim Vergleichsversuch 1 wird als Entlüfter ein lineares Polyether-Polysiloxan-Copolymer nach dem Stand der Technik, gemäß GB 2 350 117 A, eingesetzt. Dieses wurde wie folgt hergestellt:

67 g eines mit Methylgruppen terminierten Siloxans aus Dimethylsiloxy- und Hydrogenmethylsiloxyeinheiten mit einem Aktivwasserstoffgehalt von 0,133 % und einer Viskosität von 72 mm$^2$/s (25°C) werden unter kräftigem Rühren mit 408 g eines Allylpolyethers (560 ppm $H_2O$-Gehalt) mit einem PO/EO-Verhältnis von 4,0 und einer Jodzahl von 11,2 vermischt und auf 100°C erwärmt, Durch Zugabe von 0,5 ml einer 2 %-igen Lösung von Hexachloroplatinsäure in Isopropanol wird die Hydrosilylierung gestartet, was sich in einer schwach exothermen Reaktion zeigt. Das Reaktionsgemisch wird bei 100 bis 110°C gehalten, bis ein klares Copolymer erhalten wird und kein Aktivwasserstoff mehr nachweisbar ist. Das Polysiloxan mit seitenständigen Polyethergruppen, hat eine Viskosität von 870 mm$^2$/s (25°C) .

Polymer V2:

Beim Vergleichsversuch 2 wird ein Polypropylenoxid mit einer mittleren molaren Masse (Zahlenmittel $M_n$) von 400g/mol, welches nicht erfindungsgemäß ist, verwendet.

Polymer V3 (gemäß WO 2006/128624 A1):

Polymer V1 wird auf 130°C erwärmt,und Wasserspuren werden bei 1 hPa entfernt. Danach werden 7 g Hexamethylendiisocyanat eindosiert und 20 Minuten lang homogenisiert. Die Isocyanatreaktion wird mit einem Tropfen Dibutylzinnlaurat (DBTL) gestartet. Nach zwei Stunden ist der NCO-Gehalt unter die Nachweisgrenze (IR: 20 ppm) gesunken, so dass 120 g eines Tensides (käuflich erhältlich unter der Bezeichnung Emulan® HE 50 bei der BASF SE, D-Ludwigshafen) eindosiert werden. Die 80 %-ige Copolymerlösung hat nach dem Abkühlen auf 25°C eine Viskosität von 2100 mm$^2$./s und einen Urethangehalt von 0,139 mEqu./g.

Polymer V4:

Polymer V4 ist ein Polydimethysiloxan mit einer Kettenlänge von ca. 200 wie unter Anspruch 1 in DE 1444442 beschrieben.
Die Zugabemengen der Polymere oder deren Mischungen in die Schwarzablauge sind in der Tabelle angegeben.
Die Ergebnisse der Prüfung der Wirksamkeit bei der Entlüftung sind in der Tabelle zusammengefasst.

**Tabelle**

| Beispiele/ Vergleichsversuche | Entlüfter | Zugabemenge in µl | Entlüftung in Schwarzablauge von Hartholz in % | Entlüftung in Schwarzablauge von Weichholz in % |
|---|---|---|---|---|
| Beispiel 1* | Polymer 1 | 8 | 53,0 | 83,2 |
| Beispiel 2* | Polymer 2 | 8 | 52,9 | 78,5 |
| Beispiel 3* | 70% Polymer 1 und 30% Polymer V1 | 8 | 55,8 | 85,6 |
| Beispiel 4 | 70% Polymer 1 und 30% Polymer V3 | 8 | 58,1 | 88,9 |
| Vergleichsversuch 1 | Polymer V1 | 8 | 43,9 | 69,2 |
| Vergleichsversuch 2 | Polymer V2 | 8 | 0 | 0 |
| Vergleichsversuch 3 | 70% Polymer 1 und 30% Polymer V4 . Beide Polymere sind nicht homogen mischbar, es wurden daher keine Entlüftungsversuche durchgeführt. | n.a. | n.a. | n.a. |
| *nicht erfindungsgemäß | | | | |

Wie aus der Tabelle zu entnehmen ist, ist die Entlüftung bei den Vergleichsversuchen 1 und 2 deutlich schlechter als bei den Beispielen 1 bis 4.
Beim Vergleichsversuch 1 wird ein unverzweigtes lineares Polyether-Polysiloxan-Copolymer analog GB 2 350 117 A eingesetzt, beim Vergleichsversuch 2 wird ein nicht erfindungsgemäßes Polypropylenglycol verwendet.
Im Beispiel 3 wird eine homogene Mischung aus 70 % Polymer 1 und 30% Polymer V1, einem linearen Polyether-Polysiloxan-Copolymeren, eingesetzt. Durch Zugabe von 30% des Polymers V1 wird Polymer 1 wasserdispergierbar.
Überraschenderweise zeigt die Mischung aus 70% Polymer 1 und 30% Polymer V1 in Schwarzablauge aus Hart- und Weichholz eine bessere Entlüftung als die beiden Einzelpolymere.
Im Beispiel 4 wird eine homogene Mischung aus 70% Polymer 1 und 30% Polymer V3, einem verzweigten Polyether-Polysiloxan-Copolymeren, als Entlüfter eingesetzt. Durch Zugabe von 30% des Polymers V3 wird die Wirksamkeit von Polymer 1 nochmals verbessert.

Im Vergleichsversuch 3 wird eine Mischung aus 70% Polymer 1 und 30% Polymer V4, einem Dimethylpolysiloxan, gemäß DE 1444442 A eingesetzt. Die Mischung ist nicht stabil und trennt sich innerhalb weniger Minuten in 2 Phasen. Da eine über einen längeren Zeitraum stabile homogene Mischung für die spätere praktische Handhabung und Anwendung als Entlüfter von entscheidender Bedeutung ist, wurden keine Entlüftungsversuche durchgeführt.

## Patentansprüche

1. Verfahren zum Entlüften von bei der Zellstoffherstellung anfallenden Flüssigkeiten, die wässrige faserhaltige Suspensionen sind und mindestens 70 Gew.-% Wasser enthalten,
   durch Zugabe von 0,0001 bis 1,0 Gew.-% einer Mischung aus 100 Gewichtsteilen Polypropylenglycolen mit einer mittleren molaren Masse (Zahlenmittel $M_n$) von 1000 bis 8000 g/mol und 1 bis 200 Gewichtsteilen verzweigten Polyether-Polysiloxan-Copolymeren, bei denen die Polyetherreste seitenständig an lineare Siloxanketten über Kohlenwasserstoffreste SiC-gebunden sind und wobei diese linearen Siloxanketten über seitenständige organische Brücken miteinander verbunden sind,
   zu diesen Flüssigkeiten.

2. Verfahren nach Anspruch 1, **dadurch gekennzeichnet, dass** beim Verfahren zum Entlüften von Flüssigkeiten der Gasgehalt einer Flüssigkeit, die Gas in dispergierter Form enthält, also einen Mikroschaum enthält, bei dem der Volumenanteil der Flüssigkeit im Mikroschaum höher ist als der Volumenanteil an Gas, reduziert wird.

## Claims

1. Process for deaerating liquids which are obtained in pulp production, are aqueous fiber-containing suspensions and contain at least 70% by weight of water,
   by adding 0.0001 to 1.0% by weight of a mixture of 100 parts by weight of polypropylene glycols having a mean molar mass (number average $M_n$) of 1000 to 8000 g/mol and 1 to 200 parts by weight of branched polyether-polysiloxane copolymers in which the polyether radicals are SiC-bonded laterally to linear siloxane chains via hydrocarbyl radicals and where these linear siloxane chains are bonded to one another via lateral organic bridges,
   to these liquids.

2. Process according to Claim 1, **characterized in that**, in the process for deaerating liquids, the gas content of a liquid containing gas in dispersed form, i.e. containing a microfoam in which the proportion by volume of the liquid in the microfoam is higher than the proportion by volume of gas, is reduced.

## Revendications

1. Procédé pour la désaération de liquides produits lors de la fabrication de la pâte de cellulose, qui sont des suspensions aqueuses contenant des fibres et qui contiennent au moins 70 % en poids d'eau,
   par addition de 0,0001 à 1,0 % en poids d'un mélange de 100 parties en poids de polypropylèneglycols ayant une masse moléculaire moyenne (moyenne en nombre $M_n$) de 1 000 à 8 000 g/mole et 1 à 200 parties en poids de copolymères polyéther-polysiloxane ramifiés, dans lesquels les radicaux polyéther sont liés latéralement par des liaisons SiC à des chaînes siloxane linéaires via des radicaux hydrocarbonés et ces chaînes siloxane linéaires étant liées entre elles par des ponts organiques latéraux,
   à ces liquides.

2. Procédé selon la revendication 1, **caractérisé en ce que** dans le procédé pour la désaération de liquides on réduit la teneur en gaz d'un liquide qui contient du gaz sous forme dispersée, c'est-à-dire contient une micro-mousse, dans lequel la proportion en volume du liquide dans la micro-mousse est supérieure à la proportion en volume de gaz.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3235509 A
- US 3984347 A
- DE 1444442 A1
- EP 257356 B1
- GB 2350117 A
- EP 1076073 A1
- EP 1424117 A2
- WO 2006128624 A1
- DE 1444442
- DE 1444442 A

### In der Beschreibung aufgeführte Nicht-Patentliteratur

- **NEMETH, ZS. ; RACZ, GY. ; KOCZO, K.** Antifoaming action of polyoxyethylenepolyoxypropylene-polyoxyethylene-type triblock copolymers on BSA foams. *Colloids Surf., A,* 1997, vol. 127 (1-3), 151-162
- *Langmuir,* 2004, vol. 20, 9463-9505
- **ADAMS, J. W. et al.** *Verfkroniek,* 1996, vol. 68 (10), 43-45